# EUROPEAN PATENT SPECIFICATION

(11) **EP 4 073 321 B1**
(45) Date of publication and mention of the grant of the patent: **26.03.2025**
(21) Application number: 20830365.1
(22) Date of filing: 24.11.2020
(51) Int. Cl.: E01H 1/08, E01H 1/05

(54) **CLEANING MACHINE FOR A ROAD OR PAVEMENT OR GUTTER**
REINIGUNGSMASCHINE FÜR STRASSEN, PFLASTER ODER RINNEN
MACHINE DE NETTOYAGE DE ROUTE, CHAUSSÉE OU D'UN CANIVEAU

(30) Priority: 13.12.2019 NL 2024447
(43) Date of publication of application: 19.10.2022
(73) Proprietor: Ravo B.V., 1822 BW Alkmaar (NL)
(72) Inventor: PRINS, Rob, 1822 BW Alkmaar (NL)
(74) Representative: Patent Business B.V.
(86) International application number: PCT/NL2020/050738
(87) International publication number: WO 2021/118341

(56) References cited:
- WO-A1-2020/144011
- CN-A- 103 161 133
- CN-A- 103 696 381
- DE-A1- 102017 117 013

## Description

### FIELD OF THE INVENTION

The invention is in the field of a cleaning machine for a road or pavement or gutter. These machines are used to remove objects, such as small items, such as leaves, and debris, and dirt from a road or the like, using a broom system for cleaning the road or the like, and typically a storage for removed objects and dirt.

### BACKGROUND OF THE INVENTION

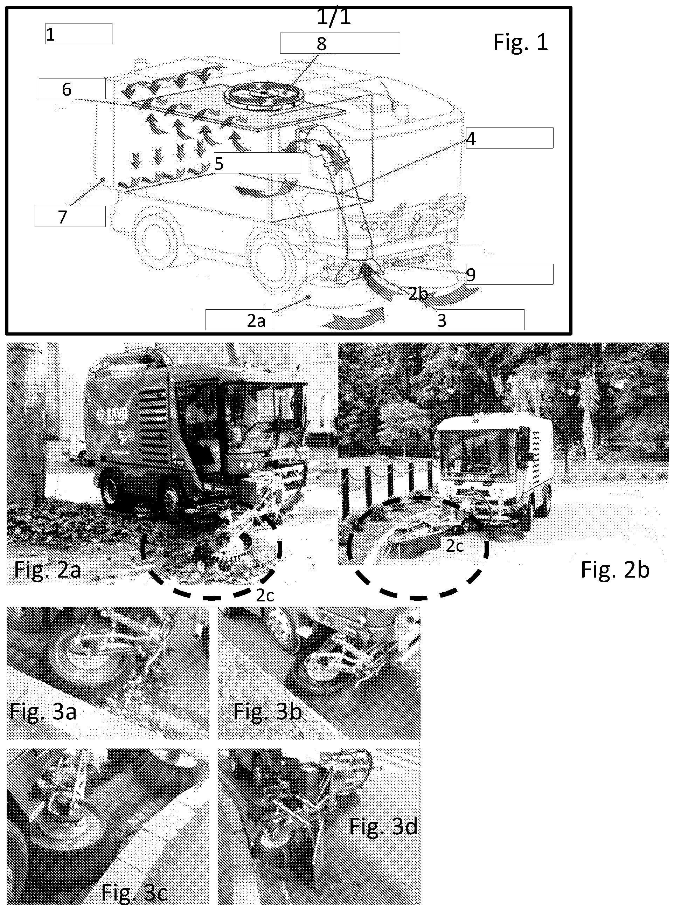

The present invention relates to a cleaning machine. A main function of such a cleaning machine is to remove dirt/debris specifically from the gutter (side of the road, edge of the pavement; curb) and to remove it from the street; dirt/debris may be understood to relate to all smaller items being present and to be up-taken. Collecting and removing the debris is typically done by means of broom(es) which sweep the debris in a direction of an uptake element, and uptake of the debris then takes place, such as by under-pressure, e.g. vacuum. Figure 1 shows an example of a prior art cleaning machine, wherein brooms, located underneath the cleaning machine and rotating, sweep the dirt/debris towards a suction mouth. The suction mouth is provided with under-pressure, thereby up-taking the dirt/debris into the machine, though a suction tube, towards a container of the machine.

For proper up-taking of dirt/debris an operator, typically the driver of the cleaning machine, uses a broom control device to move the brooms towards the dirt and debris, and at the same time steering the cleaning machine, paying attention to traffic and pedestrians, and so on. The broom control device may be a joy stick or the like. The position of the entire machine is controlled by the steering controls of the driver, such as a typical steering wheel. It is found that manually and simultaneously controlling all these movements requires a high level of practice, as well as good eye-hand coordination, and concentration. In practice, there are very few operators that are skilled enough to get optimum performance of the system. Lack of accuracy of the above described manual process may have a large impact on quality, efficiency, and speed of the cleaning work performed. Also, from an ergonomics point of view, the above is a challenging topic to address, as it is physically demanding and technically very complex to solve.

Some documents may be referred to. For instance DE 10 2017 117013 A1 recites a semi-autonomous following device, having at least one drive apparatus, at least one apparatus for steering the drive apparatus, at least one apparatus for detecting a guidance signal, at least one control unit which activates, as a manipulated variable, the apparatus for steering the at least one drive apparatus, as a function of the guidance signal. According to the invention there is provision that the control unit or a unit which is separate from the control unit activates further apparatuses as a function of the guidance signal, wherein the further apparatuses are selected from the group comprising: direction indicator, vehicle lights, machine modules and radio-operated remote-control systems. The interconnection of the apparatuses increases the safety of the locomotion of the following device in the public space and also the efficiency of the cooperation between the machine and the user. CN 103 161 133 A recites a an intelligent road-cleaning vehicle based on machine vision. The intelligent road-cleaning vehicle comprises a vehicle body provided with a cleaning machine, a first light source, a second light source, an image obtaining device, an image extracting device, an image processing device, a first judging device and an automatic turning device, wherein the image extracting device is used for extracting an image of a targeted area from a road surface image, the image processing device is used for conducting grayscale adjustment and binarization treatment to the image of the targeted area to generate a binary image and covering a two-dimensional array corresponding to the binary image to count the number of elements with values of one in the two-dimensional array, the first judging device is used for judging whether the number of the elements with the values of one is larger than a preset value, and the automatic turning device is used for sending an order of turning right to the vehicle body when a judging result of the first judging device is yes, and sending an order of turning left to the vehicle body when the judging result of the first judging device is no. The intelligent road-cleaning vehicle is based on the machine vision, is capable of turning and changing speed automatically, and has a value of actual popularization. CN 103 696 381 A recites a control method, a control device, a control system and a sweeping vehicle for road edge cleaning. The control method comprises the following steps: obtaining the distance between a sweeping device and a road edge in real time according to the information of the road edge; when the distance between the sweeping device and the road edge exceeds a preset range, sending out a control command so as to adjust the position of the sweeping device, so that the distance between the sweeping device and the road edge is always in the preset range so as to ensure that the sweeping of the road edge is efficiently completed, avoid collision with the road edge, reduce the working difficulty of operators and improve the work efficiency. WO 2020/144011 A1, which is published after the present priority date, recites a method for operating a cleaning vehicle, in particular a road sweeper which can be operated in an automated manner, by means of a control device, wherein a trajectory is calculated and control commands for longitudinal guidance and lateral guidance of the cleaning vehicle when driving along the calculated trajectory are generated, measurement data are received from at least one sensor for determining a cleaning area, and at least one actuator for positioning a cleaning apparatus of the cleaning vehicle for cleaning the cleaning area is controlled in the longitudinal direction and/or transverse direction relative to a direction of travel of the cleaning vehicle on the basis of the received measurement data. A control device, a computer program and a machine-readable storage medium are also disclosed.

The present invention therefore relates to an improved cleaning machine, and a pavement track system, which overcome one or more of the above disadvantages, without jeopardizing functionality and advantages.

### SUMMARY OF THE INVENTION

The present invention relates in a first aspect to a cleaning machine (1) for a road or pavement or gutter comprising a vehicle (2), the vehicle comprising at least one vertically and horizontally movable broom system (3), a controller (4) for moving said broom system, and optionally a display (5) for viewing a position of the at least one broom system, characterized in a pavement track system (6) comprising a 3D camera (7) providing 3D-images, pattern recognition software adapted to process the 3D-images, wherein the pattern recognition software identifies a side of the road, and wherein the pattern recognition software measures a distance from the vehicle to the side of the road, and wherein the controller is adapted to move the broom-system and preferably also the vehicle sideways such that a distance between the broom system and side of the road is controlled. The at least one vertically and horizontally movable broom system is typically provided on a right side of the cleaning machine in countries where vehicles drive at a right side of the road, or in the alternative on the left side. A second broom may typically be provided at the other (left or right) side. So each broom system may comprise one broom, two brooms, or more than two brooms, such as three brooms. Therewith significant improvements are achieved. By implementing a 3D camera, image recognition and connecting it to the described machine control functions, the above described functions are automated during a significant part of the operating/cleaning process. A reliable, automated broom positioning system is found to have a positive effect on quality, efficiency, speed and ergonomic aspects of the work performed. A reliable recognition of the curb is provided, by ignoring the dirt (to be removed) visible in the image, compensating for broom-wear, and adapting for difficult image situations (high contrast, low light, etc.). Added value of the system is found in a lower strain, stress, and fatigue for the operator during significant part of the operation, both physical (ergonomics, repetitive movements, sitting position) and psychological (concentration, fatigue), a better and more constant quality of work, i.e. better and more efficient cleaning, and no declining of quality by loss of concentration or distraction of the operator. Further it is found that past experience of the operator has less or no influence on the quality of the work. In addition, an improved traffic security is provided, as the operator can pay more attention to traffic, pedestrians and other surroundings. Typical components of the present pavement track system are a 3D camera, image recognition software + hardware, including a connection to machine control functions. The image recognition software used may be Open Source software. The software is taught to detect the curb. Electronic control of at least one broom side-shift is provided, as well as electronic control of vehicle steering (including manual override safety). Some main software steps may be acquisition of a 3D image from the camera, a translation of the 3D-image to a 2D image, a determination of a "rising edge" or "falling edge" in the 2D image, representing the curb, identifying at least 3 points on the "rising edge"/"falling edge" and thereby validating a line representing the curb on reliability, such as by calculation a standard deviation, establishing if these at least 3 points are reliable for at least 2 consecutive frames/images and then accepting the representation of the curb, and further, when accepted, these points are sent to a machine control such as via CAN, to initiate the required control actions. It is found that the identification of the falling edge, i.e. an upper edge of a curb, provides more reliable and reproduceable results. The edge is preferably determined ahead of the machine, in the direction of movement, such as 0.5-3 m ahead of the machine, e.g. 1-2 m. As the speed of the cleaning machine is known, the speed of the machine, and the measured distance of the broom from a curb, can be used to move the brush-system towards or from the curb when advancing. Typically positioning of the can be done by moving the broom-system and/or vehicle sideways such that a distance between the broom system and side of the road is controlled. The vehicle control can at least partly by overtaken by an automated system, in view of the present hydraulic system, such as an orbitrol. The automated system can perform relatively simple tasks, such as positioning of the cleaning machine, driving, steering, and somewhat more complex tasks, as recognition of obstacles and human beings, especially in front of the machine. In view of the limited speed of the cleaning machine such an automated system could already be sufficient.

For improved range and added functionality, an option is to use the third broom system. This option provides an increased sweeping width/range and is often used with a dedicated broom for weed removal. Operating this third broom typically has similar requirements as the first and second brooms: it may be too far from the curb and thereby dirt/debris is missed/not picked up, it may be too close to the curb and the wires of the broom are pushed flat, the broom does not move the dirt effectively. Operation of the third broom may be done by a second joystick, in addition to the standard controls. For the operator this implies operating two joysticks simultaneously; operating/movement of this 3rd broom is very frequent. The construction of the third broom is typically similar to the first and second broom system: the position of the third broom relative to the machine, controlled by the so-called "third broom side-shift", this is a linear movement, perpendicular to the length axis of the machine (driving direction). And the distance between the machine itself and the curb is controlled.

In a second aspect the present invention relates to a pavement track system computer program comprising instructions for operating the Cleaning machine (1) according to one of the claims 1-12, the instructions causing the computer (1) to carry out the following steps: loading 3D images, identifying the pavement; determining a distance between the broom system and pavement; and maintaining said distance within predetermined limits by moving said broom system by means of the controller sideways.

Thereby the present invention provides a solution to one or more of the above-mentioned problems.

Advantages of the present invention are detailed throughout the description.

### DETAILED DESCRIPTION OF THE INVENTION

The present invention relates in a first aspect to a cleaning machine according to claim 1.

In an exemplary embodiment of the present cleaning machine the controller may adapt the distance in view of broom wear.

In an exemplary embodiment the present cleaning machine may further comprise a second broom system, and optionally a third broom system.

In an exemplary embodiment of the present cleaning machine the software may adapt for shadow effects.

In an exemplary embodiment of the present cleaning machine the software may adapt for contrast.

In an exemplary embodiment of the present cleaning machine the software may be trained for recognizing the pavement, such as for identifying a rising edge thereof (curb).

In an exemplary embodiment of the present cleaning machine the software may be adapted to validate a position of the rising edge, such as by validating if at least three identified points of the rising edge have a linear relationship (are on one line).

In an exemplary embodiment of the present cleaning machine the rising edged may be validated on at least two consecutive 3D-images, and combinations thereof.

In an exemplary embodiment of the present cleaning machine the control may be electronic.

In an exemplary embodiment of the present cleaning machine a CAN-bus may be used for control.

In an exemplary embodiment of the present cleaning machine the controller may be adapted to be manually over-ride.

In an exemplary embodiment of the present cleaning machine the controller may be adapted to maintain the distance between the broom system and side of the road at a constant value within a predetermined limit.

In an exemplary embodiment of the present cleaning machine an orientation of the 3D-camera may be adaptable, such as adaptable to be oriented substantially towards a side of the road.

In an exemplary embodiment of the present cleaning machine the 3D-camera may be adaptable to be in a height position providing images of the side of the road.

In an exemplary embodiment of the present cleaning machine brooms may be adapted to sweep debris and dirt to a suction point, such as by rotating.

In an exemplary embodiment of the present cleaning machine brooms may be adapted to move with respect to the cleaning-machine in a horizontal direction and/or vertical direction, preferably move each individually, and preferably move independent in the horizontal and vertical direction.

In an exemplary embodiment of the present cleaning machine the cleaning machine may comprise a suction system for up-taking debris and dirt from the suction point, such as an enlarged suction opening, connected to the suction opening a suction tube, at the other end of the suction tube a container for receiving dirt and debris, and a fan for providing suction, such as by under-pressure, e.g. a centrifugal fan.

In an exemplary embodiment of the present cleaning machine the cleaning machine may comprise at least one ventilation opening, and an outlet, preferably comprising a filter for removing small particles.

In an exemplary embodiment of the present pavement track system may further comprise instructions for recognition of a curb, and/or neglecting the dirt/debris to be removed visible in the image, and/or compensating for broom-wear, and/or adapting for difficult image situations, such as high contrast, and low light.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE FIGURES

Figure 1 show an exemplary embodiment of the present machine.
Figures 2a-b show a third broom system.
Figures 3a-d show operational aspects of the present cleaning machine.

### DETAILED DESCRIPTION OF THE FIGURES

In the figures:
- 1: Cleaning machine
- 2a: first right hand broom
- 2b: optional second left hand broom
- 2c: optional third broom
- 3: suction mouth
- 4: suction tube
- 5: container
- 6: filter
- 7: outlet
- 8: suction fan
- 9: side shift
- 10: 3D camera

Figure 1 show an exemplary embodiment of the present machine.

Figures 2a-b show a third broom system, indicated with a circle.

The figures are further detailed in the description and examples below.

The present cleaning machine takes over a significant part of the manual control of several functions of the sweeper, during sweeping operation. This reliefs the driver of a difficult, tiring task.

In an example the present modification is designed and integrated in the sweeper, leaving all existing/present functions of e.g. the Ravo type 5 machine otherwise unchanged. Controlling these functions can still be performed manually, but also an automatic mode is available.

The present sweeper, or streetsweeper, can best be described as a large domestic vacuum cleaner. All typical components of a vacuum cleaner are typically there: an engine driving a (centrifugal) fan that creates vacuum, thus creating air movement in a suction nozzle that picks up dirt/debris. Through a (suction)tube the airflow transports the dirt/debris into the dirt/debris container (See figure 1). To be able to work on a road surface, the machine typically meets a number of road-specific requirements: (i) it provides sufficient cleaning width: as the width of the suction nozzle is typically only 30 cm, this is too narrow to deliver efficient cleaning. To increase the cleaned surface width, brooms are added, that move dirt/debris from both sides (L+R) to the center of the machine, where the suction nozzle is located (See figure 1); (ii) as a standard two brooms (L+R) are typically provided, which result in a total sweeping width of approximately 2 meters; (iii) an optional third 3rd broom is provided for an increased width with approximately 70 - 90 cm extra. It also provides an increased flexibility to reach into corners and other hard to reach areas. (iv) As the brooms typically use a certain force on the ground, that is kept more or less constant, independent from shape of the road-surface, speed-bumps and broom wear (a worn broom weighs less than a new one) This load-regulating system is based on a spring-loaded mechanism; (v) The brooms are best kept in a rather precise position relative to the side of the road and/or curb to function properly; when they are too far from the curb dirt/debris may be missed, when they are too close to the curb hairs/wires from the broom may be pushed flat to the surface, and the broom may not work properly. This relative position is typically determined by two factors: The position of the entire machine; this may be controlled by the driver/operator, steering the machine towards- or away from the curb (normal/standard steering function of the vehicle); The position of the 2 standard brooms, relative to the machine; to provide easy, fast position changing of the brooms, vertically and horizontally movable broom system onto which these brooms are preferably mounted on a sub-frame ("broom carriage") that can move sideways (perpendicular to the driving direction of the vehicle); this system is called "side-shift" and enables the brooms to be positioned closer or further away to the curb. This side-shift, and the relative position of the broom with respect to the machine is controlled with a sensor, the sensor measuring the relative position and capable of adapting the relative position. This movement is controlled by hand, with a controller, by the operator. Electrical signals from the joystick (part of the controller) are connected to the computer controlling the machine (PLC); this PLC in its turn sends electrical signals to the hydraulic valves (operator, joystick). The physical movement of the entire broom carriage is typically powered by a hydraulic cylinder (See figure 1); (vi) The principle of operating the 3rd broom is identical to that of the standard brooms, but it is mounted on a separate frame and thus able to function independent from the standard brooms (See figures 2a and 2b).

The above describes functionality of the present sweeper, relating to proven Ravo 5 technology.

The integration of the present invention into the Ravo 5 machine may be done mainly electrically, such as through software, or by adding an electrical function to an existing (hydraulic) component. An example of the latter is an additional, electrically controlled steering function. This allows the electronic machine control to influence the mechanical/hydraulic steering unit, thus creating automated steering.

Addition of the 3D camera to the machine, creating a 3D image to determine the distance between the machine and the curb, by image recognition, and bring this information with respect to the distance to the control-computer of the machine, allows the introduction of an automatic sweep function, relieving the driver of a tiring task, creating better efficiency, and more safety.

## Claims

1. Cleaning machine (1) for a road or pavement or gutter adapted to be steered by a driver comprising
a vehicle (2), the vehicle comprising at least one with respect to the vehicle vertically and horizontally movable broom system (3),
a controller (4) for moving said broom system,
**characterized in**
a pavement track system (6) comprising a 3D camera (7) providing 3D-images, pattern recognition software adapted to process the 3D-images, wherein the pattern recognition software identifies a side of the road, and wherein the pattern recognition software measures a distance from the vehicle to the side of the road, and
wherein the controller is adapted to move the broom-system sideways with respect to the vehicle such that a distance between the broom system and side of the road is controlled.

2. Cleaning machine according to claim 1, wherein the controller is adapted to move the vehicle sideways such that a distance between the broom system and side of the road is controlled.

3. Cleaning machine according to any of claims 1-2, wherein the controller adapts the distance in view of broom wear.

4. Cleaning machine according to any of claims 1-3, further comprising a second broom system, and optionally a third broom system.

5. Cleaning machine according to any of claims 1-4, wherein the software adapts for contrast and/or wherein the software adapts for shadow effects, and/or
wherein the software is trained for recognizing the pavement, such as for identifying a rising edge thereof, such as a curb.

6. Cleaning machine according to any of claims 1-6, further adapted to be steered by an operator.

7. Cleaning machine according to claim 5, wherein the software is adapted to validate a position of the rising edge, such as by validating if at least three identified points of the rising edge have a linear relationship such that they are located on a line, and/or wherein the rising edged is validated on at least two consecutive 3D-images, and combinations thereof.

8. Cleaning machine according to any of claims 1-7, wherein the control is electronic, and/or wherein a CAN-bus is used for control.

9. Cleaning machine according to any of claims 1-8, wherein the controller is adapted to be manually over-ride.

10. Cleaning machine according to any of claims 1-9, wherein the controller is adapted to maintain the distance between the broom system and side of the road at a constant value within a predetermined limit.

11. Cleaning machine according to any of claims 1-10, wherein an orientation of the 3D-camera is adaptable, such as adaptable to be oriented substantially towards a side of the road, and/or adaptable to be in a height position providing images of the side of the road.

12. Cleaning machine according to any of claims 1-11, wherein brooms are adapted to sweep debris and dirt to a suction point, such as by rotating, and/or
wherein brooms are adapted to move with respect to the cleaning-machine in a horizontal direction and/or vertical direction, preferably move each individually, and preferably move independent in the horizontal and vertical direction, and/or
wherein the cleaning machine comprises a suction system for up-taking debris and dirt from the suction point, such as an enlarged suction opening, connected to the suction opening a suction tube, at the other end of the suction tube a container for receiving dirt and debris, and a fan for providing suction, such as by under-pressure, and/or
wherein the cleaning machine comprises at least one ventilation opening, and an outlet, preferably comprising a filter for removing small particles, and/or
further comprising a display (5).

13. A pavement track system computer program comprising instructions for operating the Cleaning machine (1) according to one of the claims 1-12, the instructions causing the computer (1) to carry out the following steps:
loading 3D images,
identifying the pavement;
determining a distance between the broom system and pavement; and
maintaining said distance within predetermined limits by moving said broom system with respect to the vehicle by means of the controller sideways.

14. Pavement track system computer program according to claim 13, further comprising instructions for
recognition of a curb, and/or
neglecting the dirt/debris to be removed visible in the image, and/or
compensating for broom-wear, and/or
adapting for difficult image situations, such as high contrast, and low light.

## Patentansprüche

1. Reinigungsmaschine (1) für eine Straße oder einen Bürgersteig oder eine Rinne angepasst, um von einem Fahrer gesteuert zu werden, umfassend ein Fahrzeug (2), wobei das Fahrzeug mindestens ein vertikal und horizontal bewegliches Besensystem (3) umfasst,
eine Steuerung (4) zum Bewegen des Besensystems,
**gekennzeichnet durch**
ein Bürgersteigschienensystem (6), das eine 3D-Kamera (7) umfasst die 3D-Bilder liefert, eine Mustererkennungssoftware, die zum Verarbeiten der 3D-Bilder geeignet ist, wobei die Mustererkennungssoftware einen Straßenrand identifiziert und
wobei die Mustererkennungssoftware einen Abstand vom Fahrzeug zum Straßenrand misst, und wobei die Steuerung zum seitlichen Bewegen des Besensystems geeignet ist, so dass ein Abstand zwischen dem Besensystem und dem Straßenrand gesteuert wird.

2. Reinigungsmaschine nach Anspruch 1, wobei die Steuerung dazu ausgebildet ist, das Fahrzeug seitwärts zu bewegen, so dass ein Abstand zwischen dem Besensystem und dem Straßenrand kontrolliert wird.

3. Reinigungsmaschine nach einem der Ansprüche 1-2, wobei die Steuerung den Abstand im Hinblick auf den Besenverschleiß anpasst.

4. Reinigungsmaschine nach einem der Ansprüche 1 - 3, die außerdem ein zweites Besensystem und optional ein drittes Besensystem umfasst.

5. Reinigungsmaschine nach einem der Ansprüche 1 - 4, wobei die Software sich an den Kontrast anpasst und/oder wobei die Software sich an Schatteneffekte anpasst und/oder wobei die Software darauf trainiert ist, den Bürgersteig zu erkennen, beispielsweise eine steigende Kante davon (Bordstein) zu identifizieren.

6. Reinigungsmaschine nach einem der Ansprüche 1 bis 6, die zum Lenken durch einen Bediener oder Fahrer geeignet ist.

7. Reinigungsmaschine nach Anspruch 5, wobei die Software dazu geeignet ist, eine Position der ansteigenden Kante zu validieren, etwa durch Validieren, ob mindestens drei identifizierte Punkte der ansteigenden Kante eine lineare Beziehung aufweisen (auf einer Linie liegen), und/oder wobei die ansteigende Kante anhand von mindestens zwei aufeinanderfolgenden 3D-Bildern validiert wird, und Kombinationen davon.

8. Reinigungsmaschine nach einem der Ansprüche 1-7, wobei die Steuerung elektronisch ist und/oder wobei zur Steuerung ein CAN-Bus verwendet wird.

9. Reinigungsmaschine nach einem der Ansprüche 1 bis 8, wobei die Steuerung so ausgelegt ist, dass sie manuell übersteuert werden kann.

10. Reinigungsmaschine nach einem der Ansprüche 1-9, wobei die Steuerung dazu ausgelegt ist, den Abstand zwischen dem Besensystem und dem Straßenrand auf einem konstanten Wert innerhalb einer vorgegebenen Grenze zu halten.

11. Reinigungsmaschine nach einem der Ansprüche 1-10, wobei eine Ausrichtung der 3D-Kamera anpassbar ist, beispielsweise anpassbar, um im Wesentlichen auf einen Straßenrand ausgerichtet zu sein, und/oder anpassbar, um sich in einer Höhenposition zu befinden, die Bilder vom Straßenrand liefert.

12. Reinigungsmaschine nach einem der Ansprüche 1-11, wobei die Besen dazu geeignet sind, Schmutz und Ablagerungen zu einem Saugpunkt zu kehren, beispielsweise durch Drehen, und/oder
wobei die Besen dazu geeignet sind, sich in Bezug auf die Reinigungsmaschine in horizontaler und/oder vertikaler Richtung zu bewegen, vorzugsweise jede einzeln, und sich vorzugsweise unabhängig in horizontaler und vertikaler Richtung zu bewegen, und/oder wobei die Reinigungsmaschine ein Saugsystem zum Aufsaugen von Schmutz und Ablagerungen vom Saugpunkt umfasst, beispielsweise eine vergrößerte Saugöffnung, ein mit der Saugöffnung verbundenes Saugrohr, am anderen Ende des Saugrohrs einen Behälter zum Aufnehmen von Schmutz und Ablagerungen und einen Ventilator zum Erzeugen einer Saugleistung, beispielsweise durch Unterdruck,
und/oder
wobei die Reinigungsmaschine mindestens eine Belüftungsöffnung und einen Auslass umfasst, vorzugsweise umfassend einen Filter zum Entfernen kleiner Partikel,
und/oder
weiterhin umfassend eine Anzeige ( 5 ).

13. Ein Computerprogramm für ein Straßenbelagsschienensystem, das Anweisungen zum Bedienen der Reinigungsmaschine (1) gemäß einem der Ansprüche 1 - 12 umfasst, wobei die Anweisungen den Computer (1) veranlassen, die folgenden Schritte auszuführen:
Laden von 3D-Bildern,
Identifizieren des Straßenbelags;
Bestimmen eines Abstands zwischen dem Besensystem und dem Straßenbelag; und
Aufrechterhalten dieses Abstands innerhalb vorgegebener Grenzen durch seitliches Bewegen des Besensystems mittels der Steuerung.

14. Computerprogramm für ein Straßenschienensystem nach Anspruch 13, das außerdem Anweisungen zum
Erkennen eines Bordsteins und/oder
zum Ignorieren des im Bild sichtbaren, zu entfernenden Schmutzes/Abfalls und/oder zum Ausgleichen von Besenverschleiß und/oder
zur Anpassung an schwierige Bildsituationen, wie beispielsweise hohen Kontrast und schwaches Licht, umfasst.

## Revendications

1. Machine de nettoyage (1) pour une route ou un trottoir ou un caniveau adapté pour être conduit par un chauffeur, comprenant un véhicule (2), le véhicule comprenant au moins un système de balai mobile verticalement et horizontalement (3), un contrôleur (4) pour déplacer ledit système de balai, **caractérisée en ce qu'**elle comprend un système de piste de trottoir (6) comprenant une caméra 3D (7) fournissant des images 3D, un logiciel de reconnaissance de formes adapté pour traiter les images 3D, le logiciel de reconnaissance de formes identifiant un côté de la route, et le logiciel de reconnaissance de formes mesurant une distance du véhicule au côté de la route, et le contrôleur étant adapté pour déplacer le système de balai latéralement de telle sorte qu'une distance entre le système de balai et le côté de la route soit contrôlée.

2. Machine de nettoyage selon la revendication 1, dans laquelle le contrôleur est adapté pour déplacer le véhicule latéralement de telle sorte qu'une distance entre le système de balai et le côté de la route soit contrôlée.

3. Machine de nettoyage selon l'une quelconque des revendications 1 à 2, dans laquelle le contrôleur adapte la distance en fonction de l'usure du balai.

4. Machine de nettoyage selon l'une quelconque des revendications 1 à 3, comprenant en outre un deuxième système de balai et éventuellement un troisième système de balai.

5. Machine de nettoyage selon l'une quelconque des revendications 1 à 4, dans laquelle le logiciel s'adapte au contraste et/ou dans laquelle le logiciel s'adapte aux effets d'ombre, et/ou dans laquelle le logiciel est formé pour reconnaître le trottoir, par exemple pour identifier un bord montant de celui-ci (trottoir).

6. Machine de nettoyage selon l'une quelconque des revendications 1 à 6, adaptée pour être dirigée par un opérateur ou un conducteur.

7. Machine de nettoyage selon la revendication 6, dans laquelle le logiciel est adapté pour valider une position du front montant, par exemple en validant si au moins trois points identifiés du front montant ont une relation linéaire (sont sur une ligne), et/ou dans laquelle le front montant est validé sur au moins deux images 3D consécutives, et des combinaisons de celles-ci.

8. Machine de nettoyage selon l'une quelconque des revendications 1 à 7, dans laquelle la commande est électronique et/ou dans laquelle un bus CAN est utilisé pour la commande.

9. Machine de nettoyage selon l'une quelconque des revendications 1 à 8, dans laquelle le contrôleur est conçu pour être commandé manuellement.

10. Machine de nettoyage selon l'une quelconque des revendications 1 à 98, dans laquelle le contrôleur est adapté pour maintenir la distance entre le système de balai et le côté de la route à une valeur constante dans une limite prédéterminée.

11. Machine de nettoyage selon l'une quelconque des revendications 1 à 10, dans laquelle une orientation de la caméra 3D est adaptable, par exemple adaptable pour être orientée sensiblement vers un côté de la route, et/ou adaptable pour être dans une position en hauteur fournissant des images du côté de la route.

12. Machine de nettoyage selon l'une quelconque des revendications 1 à 11, dans laquelle les balais sont adaptés pour balayer les débris et la saleté vers un point d'aspiration, par exemple par rotation, et/ou dans laquelle les balais sont adaptés pour se déplacer par rapport à la machine de nettoyage dans une direction horizontale et/ou une direction verticale, de préférence se déplacer chacun individuellement, et de préférence se déplacer de manière indépendante dans la direction horizontale et verticale, et/ou dans laquelle la machine de nettoyage comprend un système d'aspiration pour aspirer les débris et la saleté du point d'aspiration, tel qu'une ouverture d'aspiration agrandie, reliée à l'ouverture d'aspiration par un tube d'aspiration, à l'autre extrémité du tube d'aspiration par un récipient pour recevoir la saleté et les débris, et un ventilateur pour fournir une aspiration, par exemple par souspression, et/ou dans laquelle la machine de nettoyage comprend au moins une ouverture de ventilation, et une sortie, comprenant de préférence un filtre pour éliminer les petites particules, et/ou comprenant en outre un affichage (5).

13. Programme informatique de système de piste de chaussée comprenant des instructions pour faire fonctionner la machine de nettoyage (1) selon l'une des revendications 1 à 12, les instructions amenant l'ordinateur (1) à effectuer les étapes suivantes : chargement d'images 3D, identification de la chaussée ; détermination d'une distance entre le système de balai et la chaussée ; et maintien de ladite distance dans des limites prédéterminées en déplaçant ledit système de balai au moyen du contrôleur latéralement.

14. Programme informatique de système de piste de chaussée selon la revendication 13, comprenant en outre des instructions pour la reconnaissance d'une bordure de trottoir, et/ou la négligence de la saleté/des débris à éliminer visibles sur l'image, et/ou la compensation de l'usure du balai, et/ou l'adaptation à des situations d'image difficiles, telles qu'un contraste élevé et une faible luminosité.
